(19) **Europäisches Patentamt**
**European Patent Office**
**Office européen des brevets**

(11) **EP 2 184 868 B1**

(12) **EUROPEAN PATENT SPECIFICATION**

(45) Date of publication and mention
of the grant of the patent:
**26.10.2011 Bulletin 2011/43**

(51) Int Cl.:
***H04B 10/13*** *(2006.01)* ***H04B 10/18*** *(2006.01)*

(21) Application number: **09013815.7**

(22) Date of filing: **03.11.2009**

(54) **Multimode optical system**

Multimode-faseroptisches Kommunikationssystem

Système de communication à fibre optique multimode

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **07.11.2008 FR 0806238**

(43) Date of publication of application:
**12.05.2010 Bulletin 2010/19**

(73) Proprietor: **Draka Comteq B.V.**
**1083 HJ Amsterdam (NL)**

(72) Inventors:
• **Gholami, Asghar**
**84156 Isfahan (IR)**
• **Molin, Denis**
**91210 Draveil (FR)**
• **Sillard, Pierre**
**78150 le Chesnay (FR)**
• **Lumineau, Yves**
**95220 Herblay (FR)**

(74) Representative: **Blokland, Arie et al**
**Algemeen Octrooi- en Merkenbureau**
**P.O. Box 645**
**5600 AP Eindhoven (NL)**

(56) References cited:
**WO-A-2005/062505 GB-A- 2 399 963**
**US-B1- 7 194 155**

• ASGHAR GHOLAMI ET AL.: "Optimization of VCSEL Spatiotemporal Operation in MMF Links for 10-Gb Ethernet" IEEE JOURNAL OF SELECTED TOPICS IN QUANTUM ELECTRONICS, vol. 12, no. 4, July 2006 (2006-07), - August 2006 (2006-08) pages 767-775, XP002537834
• KHADIJETOU ET AL.: "Modeling and characterization of VCSEL-based Avionics Full Duplex Ethernet (AFDX) gigabit links" PROCEEDINGS OF THE SPIE, vol. 6908, January 2008 (2008-01), pages 69080J-1-69080J-9, XP002537835

**Description**

The present invention relates to the field of transmissions by optical fibre, and more specifically, short-distance optical transmission systems requiring a broad bandwidth.

Multimode fibres are commonly used for short-distance applications and local networks. The core of a multimode fibre generally has a diameter of approximately 50 μm and a numerical aperture greater than 0.2, compared to 8 to 9 μm and 0.12 for the core of a single-mode fibre. Thus, for a particular wavelength, several optical modes propagate simultaneously along the fibre, carrying the same information. The bandwidth is directly linked to the group velocity of the optical modes propagating in the multimode core of the fibre. In order to guarantee a broad bandwidth, it is necessary for the group velocities of all the modes to be identical; in other words for the intermodal dispersion, i.e. the difference in group velocity between the slowest mode and the fastest mode to be zero, or at least minimized, for a particular wavelength. Multimode fibres have been the subject of international standardization under standard ITU-T G.651 which in particular defines criteria for bandwidths, numerical aperture, core diameter which relate to the requirements for compatibility between fibres.

In order to reduce the intermodal dispersion in a multimode fibre, it has been proposed since the 1970s to produce fibres having a graded index with a parabolic core profile. Such a fibre has been used for many years and its characteristics have been described in particular in the publications "Multimode theory of graded-core fibres" by D.Gloge et al., Bell System Technical Journal 1973, pp 1563-1578, and "Pulse broadening in graded-index optical fibers" by Olshansky et al., Applied Optics, Vol. 15, No. 2, Feb 1976.

A graded-index profile can be defined by a relationship between the index value n at a point as a function of the distance r from this point to the centre of the fibre:

$$n = n_1 \sqrt{1 - 2\Delta \left(\frac{r}{a}\right)^{\alpha}}$$

with α≥1; (α→∞ corresponding to a step index profile); $n_1$, the maximum index of the multimode core; a, the radius of the multimode core; and

$$\Delta = \frac{\left(n_1^2 - n_0^2\right)}{2n_1^2};$$

where no is the minimum index of the multimode core, generally corresponding to the index of the cladding (usually made of silica).

A multimode fibre with a graded index therefore has a core profile with a rotational symmetry such that along any radial direction the value of the index decreases continuously from the centre of the fibre to its periphery. These curves are generally representative of the theoretical or set profile of the fibre, whilst the manufacturing constraints of the fibre may result in a slightly different profile.

When a light signal propagates in such a core having a graded index, the different modes experience a different propagation medium, which affects their speed of propagation differently. By adjusting the value of the parameter α, it is thus possible to theoretically obtain a group velocity which is virtually equal for all the modes and thus a reduced intermodal dispersion for a particular wavelength. A value of the parameter α comprised between 1.8 and 2.2 generally allows a satisfactory limitation of the modal dispersion.

An optimum value of the parameter α is however valid for a particular wavelength only. Document US-B-6,363,195 proposes to compensate for the modal dispersion by using a concatenation of multimode fibres in order to optimize the bandwidth for two transmission windows, one centred on 850 nm and the other on 1300 nm. This document proposes to use a length of a first multimode fibre having a value of parameter $\alpha_1$ comprised between 0.8 and 2.1 in order to optimize the bandwidth at 850 nm and a length of a second multimode fibre having a value of parameter $\alpha_2$ comprised between the first value $\alpha_1$ and 8 in order to optimize the bandwidth at 1300 nm.

Furthermore, the exact parameter value α is difficult to control during manufacture of the fibre. In order to compensate the profile deviations from a theoretical profile having an optimum value α, the document US-B-7,139,457 proposes a concatenation of multimode fibres. The alpha profile of each fibre and the length of each fibre are optimized in order to maximize the bandwidth over a given optical link.

Fibre concatenations for ensuring a compensation of the modal dispersion make the optical systems more complex and increase the cost of these systems. Moreover, these documents are not concerned with the spectral dispersion of the sources used.

The sources used in optical transmission systems are generally not monochromatic. Thus, the widely-used vertical-cavity surface-emitting lasers, known by the acronym VCSEL, have a wide-spectrum discrete emission. The VCSELs used for high-bandwidth transmissions are generally longitudinally but not transversally single mode, each transverse mode of the laser having its own wavelength corresponding to the various peaks of the emission spectrum. The emission spectrum thus has a spatial and spectral dependence.

As indicated above, a multimode fibre has an alpha profile with a value of parameter $\alpha$ optimized for a given wavelength. Thus, the introduction of a polychromatic optical signal originating from a transverse multimode source in a multimode fibre causes the appearance of a modal dispersion and consequently a reduction in the bandwidth.

The document US-A-2004/0184492 proposes to use only a single one of the transverse modes of a VCSEL source and conditions the emitted signal before its introduction into the multimode fibre. The use of a single transverse mode of a VCSEL source however greatly reduces the power of the emitted signal and leads to a reduction in the power received by an optical receiver at the end of the line, resulting in a reduction in the performance of the optical system. Moreover, filtering part of the transverse modes of the VCSEL increases the relative intensity noise (RIN). On this point reference may be made to the publication of A. Gholami et al., "Optimization of VCSEL Spatiotemporal Operation in MMF Links for 10-Gigabit Ethernet" IEEE Journal of Selected Topics in Quantum Electronics, Vol. 12, No. 4, July/August 2006.

The document US-A-2005/0078962 proposes to offset the VCSEL output from the centre of the multimode fibre in order to introduce the signal into a "large bandwidth zone". Such an offsetting is however difficult to control and has to be adjusted for each fibre. Moreover, this solution leads to a substantial loss of power in the optical system.

In GB 2 399 963, a plurality of transverse modes of a polychromatic optical signal is launched in a multimode fibre using a restricted launch technique that restricts the number of modes launched into the fibre. In particular, this document discloses to limit the proportion of encircled flux launched into the fibre within a certain radius from the center, and limiting the radius within which a higher proportion of encircled flux is launched. A disadvantage of this kind of filtering is that it decreases the signal-to-noise ratio. Moreover, it does not resolve the issue with wavelength dependancy of modal dispersion of each propagation mode of the fibre.

Other documents disclosing systems of the prior art of record are for example international patent application WO 2005/062505 and US patent number US 7,194,155.

A need therefore exists for an optical system using transverse multimode polychromatic sources which has a broad effective bandwidth without excessive loss of the power emitted by the source.

To this end, the invention is directed to an optical system comprising:

- a polychromatic optical source (10) for emitting an optical signal comprising a plurality of transverse modes of unique transverse mode order;
- an optical link comprising at least one portion of multimode optical fibre (50);
- an optical device (20) positioned between the optical source (10) and the input of the multimode optical fibre (50),
said optical device being suitable for spatially re-arranging said plurality of transverse modes dependent on said transverse mode order for coupling the energy of each of said transverse modes into a suitable propagation mode for at least partially compensating modal dispersion of said optical link with chromatic dispersion.

The invention proposes a rearrangement of the coupling of the transverse modes emitted by the source in the fibre in order to limit, or even to compensate for, the modal dispersion induced by a polychromatic signal. This rearrangement does not require filtering of the modes emitted by the source; the signal-to-noise ratio of the system is therefore not degraded. The optical device used in the invention is suitable for modifying the distribution of the energy coupling of the transverse modes emitted by the source in the propagation modes of the fibre.

In an embodiment, the optical device (20) is suitable for coupling the energy of at least one of said transverse modes into at least one suitable propagation mode of said optical link, wherein said transverse mode order of said at least one transverse mode differs from said order of said at least one propagation mode. Here, the optical device is suitable for coupling the energy of a source mode in a propagation mode of a different order in the fibre.

According to another embodiment, the optical device is suitable for distributing the energy coupling of a transverse mode of the source in a plurality of propagation modes of the fibre.

According to an embodiment, the multimode fibre has an effective modal bandwidth ($EMB_c$) less than 4700 MHz-km and the system has an effective bandwidth (EB) greater than or equal to 6000 MHz-km.

According to an embodiment, the source has a maximum spectral width ($\Delta\lambda_{m}ax$) comprised between 1 nm and 2 nm. The source can be a surface emitting laser (VCSEL) or a light-emitting diode (LED).

According to an embodiment, the system has a product of distance by Gigabit Ethernet data rate which is greater than 3000 Gb/s.m.

Other characteristics and advantages of the invention will become apparent on reading the following description of the embodiments of the invention, given by way of example and with reference to the attached drawings, which show:

- Figure 1, an emission spectrum of a VCSEL laser;
- Figure 2, a schematic diagram showing the calculation of the delay due to the modal dispersion DMD according to the criteria of the standard FOTP-220;
- Figure 3, a table showing three illustrations of DMD graphs of three multimode fibres plotted for a single mode input light pulse;
- Figure 4, a schematic representation of an optical system according to the invention;

- Figure 5, a table showing three illustrations of DMD graphs of the multimode fibres of Figure 3 plotted for an input light pulse comprising three transverse modes having three separate wavelengths at the output of an optical system not according to the invention ;
- Figure 6, a table showing schematically the broadening of the light pulse at the output of the optical system of Figure 5 ;
- Figure 7, a table showing three illustrations of DMD graphs of the multimode fibres of Figure 3 plotted for an input light pulse comprising three transverse modes having three separate wavelengths at the output of an optical system according to a first embodiment of the invention ;

- Figure 8, a table showing schematically the broadening of the light pulse at the output of the optical system of Figure 7 ;
- Figure 9, a table showing three illustrations of DMD graphs of the multimode fibres of Figure 3 plotted for an input light pulse comprising three transverse modes having three separate wavelengths at the output of an optical system according to a second embodiment of the invention ;
- Figure 10, a table showing schematically the broadening of the light pulse at the output of the optical system of Figure 9.

The invention proposes an optimized multimode optical system for use with a polychromatic source having several transverse modes, such as a VCSEL laser.

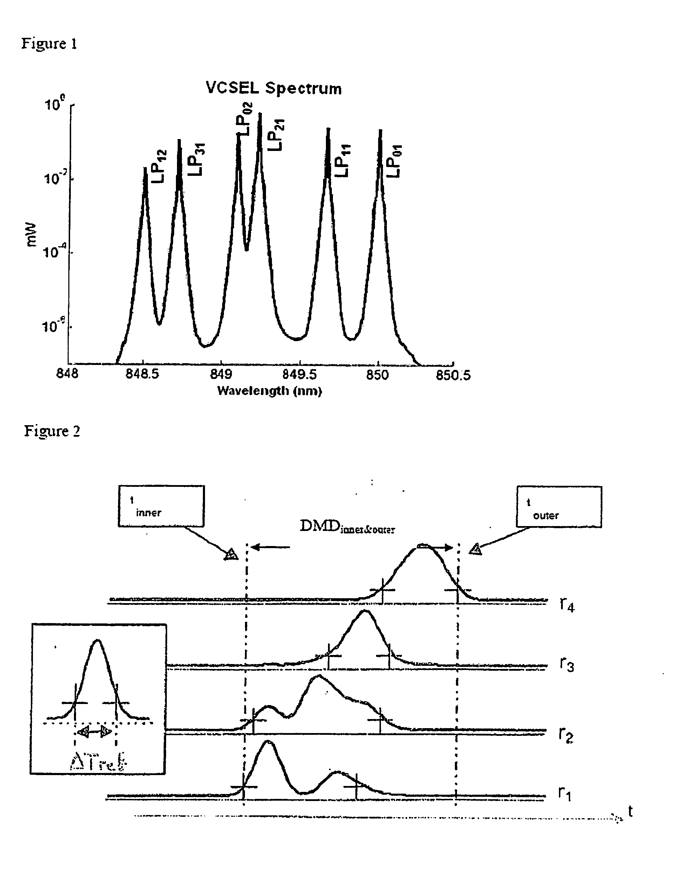

Figure 1 shows an emission spectrum of a VCSEL laser, with a mode centred on 850 nm for the excitation of the fundamental mode LP01. Figure 1 shows that each transverse mode of the laser has its own wavelength. The maximum RMS spectral width generally authorized for high-bandwidth transmission is 0.45 nm RMS for the VCSELs (as defined in the standard IEEE 802.3ae).

Thus, when the optical signal emitted by the VCSEL is introduced into a multimode fibre, each transverse mode of the VCSEL will diffract differently: the transverse modes of the highest order diverge more rapidly due to their phase and the spatial distribution of their energy, they will therefore be coupled more specifically in the high order modes of the fibre. It will be recalled that the high order modes of the VCSEL occupy the lowest wavelengths in the spectrum. This spectral and spatial distribution of the VCSEL modes results in the highest order modes of the fibres mostly carrying the lowest wavelengths in the spectrum: the chromatic dispersion will therefore further delay the higher-order modes relative to the delay of the fundamental mode.

In fact, a multimode fibre typically has a chromatic dispersion of the order of -100 ps/nm-km at a wavelength of 850 nm. The chromatic dispersion can vary between -80 and -120 ps/nm-km in the spectral range 840-860 nm. This chromatic dispersion will induce a modal dispersion by further delaying the higher-order modes of the fibre which have lower wavelengths since they are mainly excited by the transverse modes having the greatest divergences and therefore also the lowest wavelengths; this dispersion is totally independent of the modal dispersion since the chromatic dispersion depends on the material whereas the modal dispersion depends on the profile of the fibre.

The chromatic dispersion will thus introduce a modal dispersion referred to by the acronym MDICD for "Modal Dispersion Induced by Chromatic Dispersion", resulting in a limitation of the bandwidth.

The modal dispersion induced by the chromatic dispersion can be expressed according to the following equation:

$$\Delta \tau = 2x\Delta \lambda_{RMS} xDxL$$

with $\Delta t$, the modal dispersion of the light pulse;
$\lambda_{RMS}$, which represents a half-width of the emission spectrum of the source;
D, the chromatic dispersion in the multimode fibre, typically -100 ps/nm-km at 850 nm ; and
L, the length of the fibre considered.

Now, for high-bandwidth Ethernet transmission network applications over large distances, in particular for data rates larger than or equal to 10 GbE (10 Gb/s) over more than 300 m (respectively 550 m), it is necessary to guarantee an effective bandwidth larger than or equal to 2000 MHz-km (respectively 4700m MHz-km). Standard TIA-492AAAC-A specifies the required performances for 50 $\mu$m diameter high-bandwidth multimode fibres. In the case of multimode fibres, the bandwidth depends on the source used. The effective modal bandwidth (EMB) corresponds to the bandwidth of the source-fibre pair when the chromatic dispersion is disregarded. The effective bandwidth (denoted by the acronym EB) corresponds to the bandwidth of the fibre when the modal dispersion and the chromatic dispersion are taken into account.

In a manner known per se, the effective modal bandwidth EMB can be estimated by a measurement of the delay due to the modal dispersion, known under the acronym DMD for "Dispersion Mode Delay" graphical representation. The DMD measurement procedure has been the subject of standardization (IEC 60793-1-49 and FOTP-220). To carry out this measurement, care is generally taken to use a source or a fibre length such that the chromatic dispersion is effectively negligeable: the purpose is to characterize the modal dispersion of the fibre.

Figure 2 illustrates a schematic diagram of the calculation of the delay due to the modal dispersion DMD according to the criteria of the standard FOTP-220 as published in its version TIA SCFO-6.6 of 22nd November 2002.

A DMD graphical representation is obtained by injecting a light pulse having a given wavelength $\lambda_0$ at the centre of the fibre and by measuring the pulse delay after a given fibre length L; the introduction of the light pulse of given wavelength $h_0$ being radially offset to cover the entire core of the multimode fibre.

The light pulse is injected at different radial positions ($r_1$, $r_2$, $r_3$, $r_4$) with respect to the centre of the multimode optical fibre core. The width of the pulse $\Delta T_{ref}$ is measured at a quarter of the height generally at the output of the fibre of length L. The delay due to the modal dispersion $DMD_{inner\&outer}$ is then measured between a first point in time $t_{inner}$ at a quarter of the height of the leading edge of the first trace $r_1$ and a second point in time $t_{outer}$ at a quarter of the height of the trailing edge of the last trace $r_4$. The value of $DMD_{inner\&outer}$ is then defined according to the following equation :

$$DMD_{inner\&outer} = (t_{outer} - t_{inner} - \Delta T_{ref}) / L$$

When the parameter $\alpha$ of the multimode fibre is set to an optimum value $\alpha_{optimum}$, there is virtually no shift in the light pulse delay for a given wavelength $\lambda_0$ regardless of the radius r along which the pulse propagates; the intermodal dispersion is low and the effective modal bandwidth is significant. However, this alignment on the DMD graphical representation of the light pulse delays, regardless of the radius r, are valid only for a given wavelength $\lambda_0$ for a given value of parameter $\alpha$, $\alpha_{optimum}$.

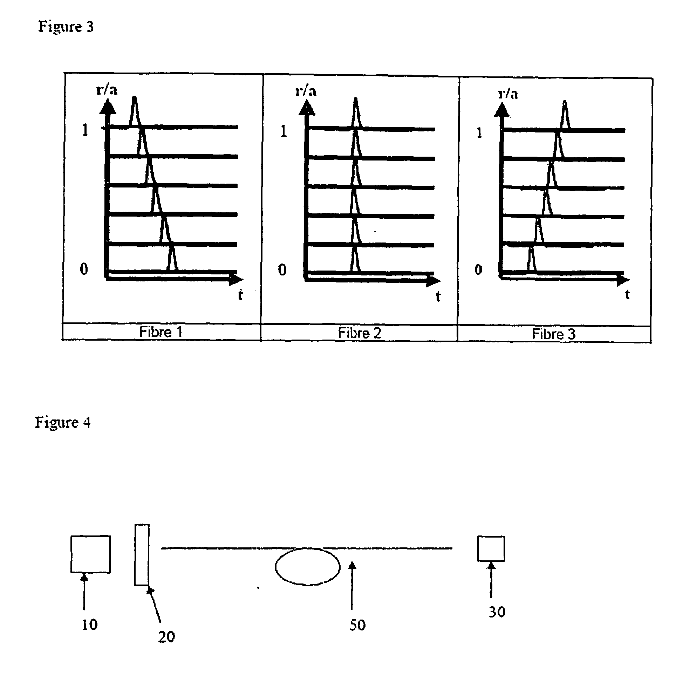

Figure 3 is a table showing three illustrations of DMD graphs for three different multimode fibres used with a multimode source.

Fibre 2 of Figure 3 shows a substantially aligned DMD graph; i.e. each pulse exhibits the same delay after a given length of fibre regardless of the radial point of injection of the signal (r/a). The modal dispersion is therefore virtually zero for the wavelength of the source used. On the other hand fibres 1 and 3 do not exhibit an aligned DMD graph; i.e. these fibres exhibit a significant modal dispersion for the wavelength of the source used. These fibres 1 and 3 therefore have an effective modal bandwidth ($EMB_c$) calculated on the basis of their DMD graph which is smaller than the effective modal bandwidth of fibre 2. Fibres 1 and 3 could thus be removed for certain applications and fibre 2 retained.

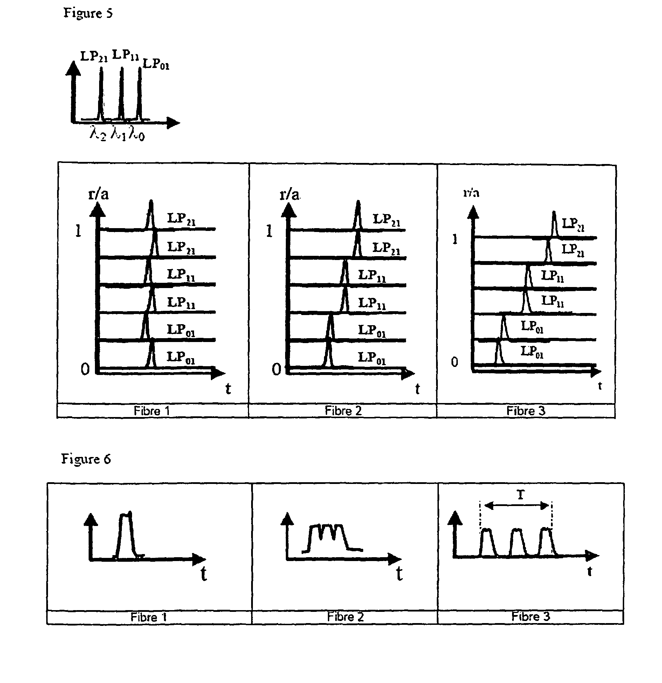

However, when a polychromatic source having several transverse modes is used, a modal dispersion is introduced despite the optimization of parameter $\alpha$. Figure 5 shows three illustrations of DMD graphs of the three previous multimode fibres plotted for a polychromatic source presenting three transverse modes having three distinct wavelengths (it is understood that the source could have more than three transverse modes; the description being limited to three for obvious reasons of clarity of the disclosure). Figure 6 is a table illustrating the broadening of the light pulse at the output of each fibre.

It is then noted that fibre 1 exhibits a substantially aligned DMD graph; i.e. each pulse has the same delay after a given length of fibre regardless of the radial point of injection of the signal (r/a). In the case of fibre 1, the chromatic dispersion has made it possible to compensate for the modal dispersion. In fact, the different source modes do not have exactly the same propagation wavelength and consequently the chromatic dispersion of the fibre induces an additional difference in group velocity between the modes of the fibre. A modal dispersion is therefore induced in the fibre by the chromatic dispersion (MDICD) when the light signal injected at the input has several transverse modes each having a different wavelength. This modal dispersion induced by the chromatic dispersion will be added to the modal dispersion induced by the index profile. It is independent of the profile of the fibre since the chromatic dispersion essentially depends on the material of the optical wave guide.

Fibre 1, which exhibited a non-zero modal dispersion (Figure 3) with a multimode source, has a minimum equivalent modal dispersion (Figures 5 and 6). By "equivalent modal dispersion" is meant the delay taking into account the chromatic dispersion.

On the other hand, it is noted in Figures 5 and 6 that fibre 2 which had a virtually zero modal dispersion with a multimode source (Figure 3), has a more significant equivalent modal dispersion due to the modal dispersion induced by the chromatic dispersion (MDICD). This equivalent modal dispersion becomes unacceptable in the case of fibre 3.

In practice, fibres 1 and 3 would have been rejected for certain applications in which a broad bandwidth is sought because their effective modal bandwidth calculated from the DMD graph (EMBc) would have been considered below the recommendations of the standards applicable to Ethernet networks. For example, with reference to the standard TIA-492AAAC-A, any multimode fibre having an effective modal bandwidth $EMB_c$ less than 4700 MHz-km is rejected for application to Ethernet networks having a data rate greater than 10 GbE over more than 550 m. It is however understood that other threshold values can be chosen according to the standards in force and the applications envisaged.

Now, it is noted from Figures 5 and 6 that fibre 1 could be used in an optical system using a transverse multimode source with a minimized equivalent modal dispersion and consequently a satisfactory effective bandwidth of the system. On the other hand, fibre 3 must be rejected and fibre 2 does not allow an effective system bandwidth as significant as assumed when it is used with a transverse multimode source.

The invention proposes an optical system making it possible to achieve a significant effective bandwidth with polychromatic sources emitting multiple transverse modes. None of the modes emitted by the source is filtered; the relative noise of the system is thus not increased.

To this end, the invention proposes to modify the distribution of the energy coupling of the transverse modes emitted by the source in the propagation modes of the fibre in order to exploit the modal dispersion induced by the chromatic dispersion (MDICD) or to limit its impact on the equivalent modal dispersion.

Figure 4 diagrammatically illustrates such an optical system according to the invention. Figure 4 shows an optical source 10, which is a polychromatic source emitting a plurality of transverse modes, for example a VCSEL or a light-emitting diode (LED). Figure 4 also shows an optical receiver 30 and an optical link comprising a multimode optical fibre 50. Figure 4 also shows an optical device 20 which is positioned between the source 10 and the input of the multimode fibre 50. This optical device 20 is suitable for modifying the spatial distribution of the transverse modes emitted by the source.

Thus, due to the presence of the optical device 20, the higher-order modes of the source, having smaller wavelengths, will not necessarily be coupled only in the high-order modes of the fibre. The higher-order modes of the fibres will thus mostly not carry the lowest wavelengths of the spectrum: the chromatic dispersion can then compensate or attenuate the modal dispersion.

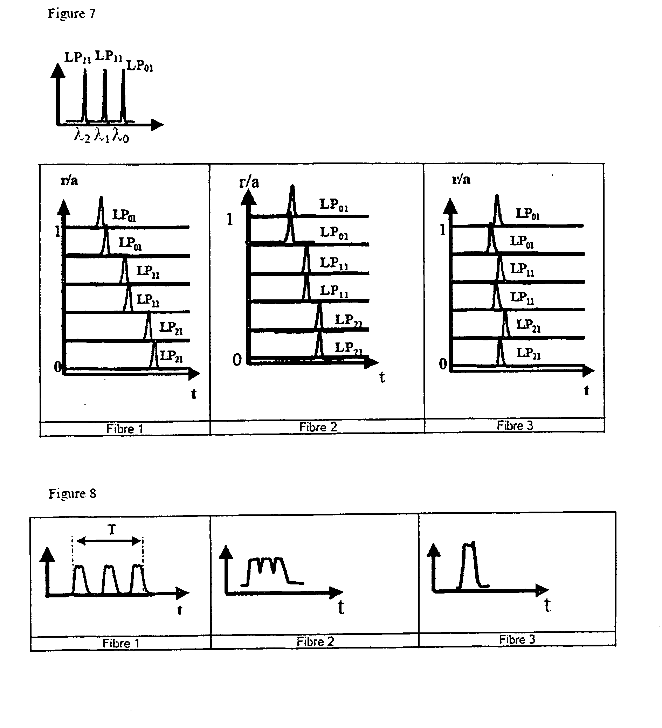

Figures 7 and 8 illustrate a first embodiment of the invention. In this embodiment, the optical device modifying the distribution of the energy coupling of the transverse modes emitted by the source in the propagation modes of the fibre makes it possible to couple the energy of a source mode (for example the fundamental mode $LP_{01}$, respectively the higher-order mode $LP_{21}$) in a mode of a different order in the fibre (for example the mode $LP_{21}$, respectively the mode $LP_{01}$). Such an optical device can be a phase mask for example, produced by diffractive optics, an additional micro-lens, a Bragg grating engraved on the source or the fibre, or a mode scrambler. A connector of the APC (Angle Polished Connector) type could also be used. It will be appreciated by the skilled reader, that any other optical device that enables changing or re-arranging the spatial distribution or position of the transverse modes may be used to achieve the results of the invention.

It can thus be noted that fibre 3, which had a significant equivalent modal dispersion when used with a transverse multimode source (Figures 5 and 6), has a minimum equivalent modal dispersion (Figures 7 and 8) when the energy of the fundamental mode of the source is coupled in a higher-order mode of the fibre. In this embodiment, the modification of the distribution of the coupling of the transverse modes emitted by the source in the propagation modes of the fibre makes it possible to compensate for the modal dispersion due to the profile of the multimode fibre by the modal dispersion induced by the chromatic dispersion.

On the other hand, in the case of fibre 1, it is noted that this modification of the distribution of the coupling of the transverse modes emitted by the source in the propagation modes of the fibre leads to a net increase in the equivalent modal dispersion. In the case of fibre 1, the modal dispersion induced by the chromatic dispersion is added to the modal dispersion due to the profile of the fibre. An optical system according to the invention using fibre 1 with a polychromatic multimode source would not make it possible to achieve a satisfactory effective bandwidth for high-bandwidth Ethernet applications.

The invention thus makes it possible to use a multimode optical fibre having an effective modal bandwidth of less than 4700 MHz-km - and which would thus have been rejected for many applications - in an optical system comprising a transverse multimode optical source with an optical device suitable for modifying the distribution of the energy coupling of the transverse modes emitted by the source in the propagation modes of the fibre. The effective bandwidth of the system is thus greater than 6000 MHz-km despite a limited modal bandwidth of the fibre.

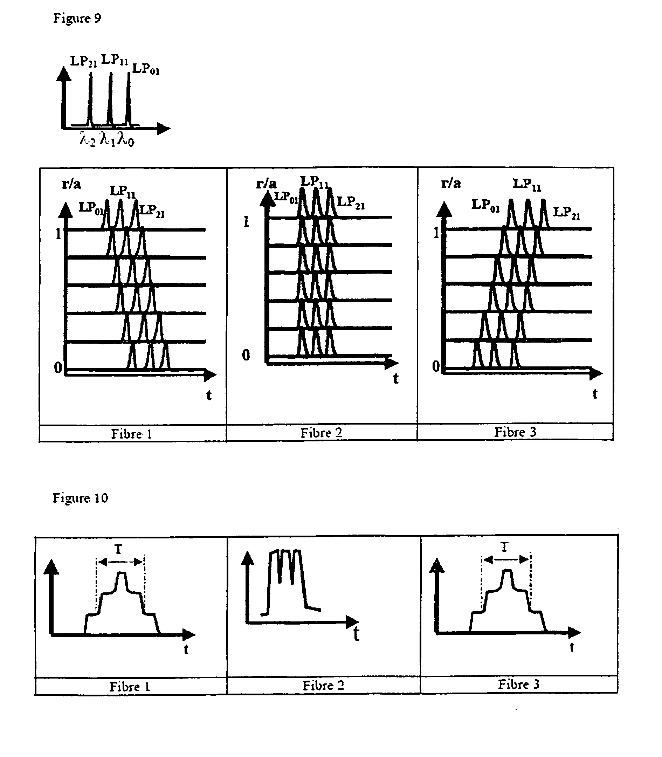

Figures 9 to 10 illustrate a second embodiment of the invention. In this embodiment, the optical device modifying the distribution of the energy coupling of the transverse modes emitted by the source in the propagation modes of the fibre makes it possible to mix the different transverse modes emitted by the source in order to broaden the radial positions of each coupled mode in the multimode fibre. The energy of the different transverse modes of the source is then distributed over several propagation modes in the fibre. Such an optical device can be produced by diffractive optics, an additional microlens, a Bragg grating engraved on the source or the fibre, or a mode scrambler. A connector of the APC (Angle Polished Connector) type could also be used. It will be appreciated by the skilled reader, that any other optical device that enables changing or re-arranging the spatial distribution or position of the transverse modes may be used to achieve the results of the invention.

Thus it is noted that fibres 1 to 3 each have a similar equivalent modal dispersion (Figure 10). In this embodiment, the energy of each mode emitted by the source is coupled in several (even all) of the propagation modes in the fibre; the chromatic dispersion thus affects each mode of transmission in substantially the same fashion and the modal dispersion induced by the chromatic dispersion (MDICD) acts to attenuate the modal dispersion due to the profile of the fibre.

According to this second embodiment, the effective bandwidth obtained is less than that obtained in the case where the chromatic dispersion acts to compensate the modal dispersion. On the other hand, the invention allows a system using such an optical device suitable for distributing the energy coupling of a transverse mode of the source in a plurality of propagation modes of fibre 1 or fibre 3 - fibres which would have been rejected for many applications on the basis of the standard measurement of their DMD.

The invention thus makes it possible to use a multimode optical fibre having an effective modal bandwidth of less than 4700 MHz-km - and which would thus have been rejected for many applications - in an optical system comprising a transverse multimode optical source with an optical device suitable for modifying the distribution of the energy coupling of the transverse modes emitted by the source in the propagation modes of the fibre. The effective bandwidth of the system is thus greater than 6000 MHz-km despite a limited modal bandwidth of the fibre.

The maximum spectral width of the source can be comprised between 1 nm and 2 nm. Most of the commercially available VCSELs have an RMS (Root Mean Square) spectral width measured as a standard deviation relative to the wavelength of greatest power comprised between 0 and 0.45 nm; a value $\lambda_{RMS}$ of 0.45 nm would lead to a maximum spectral width $\Delta\lambda_{max}$ of the order of 2 nm.

Multimode fibres are typically used for short-distance applications and local networks; the fibre lengths typically used are comprised between a few metres and several hundred metres. In such a context, the modal dispersion induced by the chromatic dispersion nevertheless remains limited.

The invention makes it possible to use low-cost transverse multimode optical sources for producing high-bandwidth Ethernet transmission networks having very good performances, with a product of distance by Gigabit Ethernet data rate which is larger than 3000 Gb/s.m and a binary error rate (BER) of approximately $10^{-12}$. The "distance by Gigabit Ethernet data rate" product corresponds to the length of the multimode fibre used multiplied by the Ethernet data rate of the system.

The description refers to multimode optical fibres with a graded index having a standardized core diameter of 50 $\mu$m, but it is understood that the invention is applicable to any type of multimode fibre used in an optical system as claimed.

## Claims

1. An optical system comprising:

    - a polychromatic optical source (10) for emitting an optical signal comprising a plurality of transverse modes of unique transverse mode order;
    - an optical link comprising at least one portion of multimode optical fibre (50);
    - an optical device (20) positioned between the optical source (10) and the input of the multimode optical fibre (50),
    said optical device being suitable for spatially re-arranging said plurality of transverse modes dependent on said transverse mode order for coupling the energy of each of said transverse modes into a suitable propagation mode for at least partially compensating modal dispersion of said optical link with chromatic dispersion, **characterized in that** said optical device (20) is suitable for coupling the energy of at least one of said transverse modes into at least one suitable propagation mode of said optical link, wherein said transverse mode order of said at least one transverse mode differs from said order of said at least one propagation mode.

2. The system according to any of the claims 1, wherein said order of transverse modes is reversed by said optical device in respect to said order of propagation modes of said optical link.

3. The system according to any of the previous claims, wherein the optical device (20) is suitable for coupling said optical signal for distributing the energy of a transverse mode in a plurality of propagation modes of the fibre.

4. The system of one of the previous claims, in which the multimode fibre is selected to have an effective modal bandwidth (EMBc) of less than 4700 MHz-km and the system has an effective bandwidth (EB) of larger than or equal to 6000 MHz-km.

5. The system of one of the previous claims, in which the source (10) has a maximum spectral width ($\Delta\lambda_{max}$) comprised between 1 nm and 2 nm.

6. The system of one of the previous claims, in which the source (10) is a surface emitting laser (VCSEL) or a light-emitting diode (LED).

7. The system of one of the previous claims, wherein the length of the multimode fibre used multiplied by the Ethernet data rate of the system is larger than

8. The system of one of the previous claims, wherein said optical device comprises at least one element of a group comprising a phase mask, in particular a phase mask produced by diffractive optics, a micro-lens, a Bragg grating, in particular a Bragg grating engraved on said source or on said fibre, a mode scrambler, and a connector of the Angle Polished Connector (APC) type.

## Patentansprüche

1. Optisches System mit:

    - einer polychromatischen optischen Quelle (10) zum Aussenden eines optischen Signals, die mehrere Transversalmoden mit einer einzigen Transversalmodenordnung umfasst,
- einer optischen Verbindung mit mindestens einem Abschnitt einer optischen Multimode-Faser (50),
- einer optischen Vorrichtung (20), die zwischen der optischen Quelle (10) und dem Eingang der optischen Multimode-Faser (50) angeordnet ist, wobei die optische Vorrichtung dazu geeignet ist, die mehreren Transversalmoden in Abhängigkeit von der Transversalmodenordnung räumlich umzuordnen, um die Energie jeder der Transversalmoden in eine geeignete Ausbreitungsmode zu koppeln und die modale Dispersion der optischen Verbindung zumindest teilweise mit chromatischer Dispersion zu kompensieren, **dadurch gekennzeichnet, dass** die optische Vorrichtung (20) dazu geeignet ist, die Energie mindestens einer der Transversalmoden in mindestens eine geeignete Ausbreitungsmode der optischen Verbindung zu koppeln, wobei sich die Transversalmodenordnung der mindestens einen Transversalmode von der Ordnung der mindestens einen Ausbreitungsmode unterscheidet.

2. System nach Anspruch 1, bei dem die Ordnung der Transversalmoden durch die optische Vorrichtung in Bezug auf die Ordnung der Ausbreitungsmoden der optischen Verbindung umgekehrt wird.

3. System nach einem der vorhergehenden Ansprüche, bei dem die optische Vorrichtung (20) dazu geeignet ist, das optische Signal so zu koppeln, dass die Energie einer Transversalmode in mehrere Ausbreitungsmoden der Faser verteilt wird.

4. System nach einem der vorhergehenden Ansprüche, bei dem die Multimode-Faser so ausgewählt ist, dass sie eine effektive modale Bandbreite (EMBc) von weniger als 4700 MHz-km besitzt, und das System eine effektive Bandbreite (EB) von mindestens 6000 MHz-km besitzt.

5. System nach einem der vorhergehenden Ansprüche, bei dem die Quelle (10) eine maximale Spektralbreite ($\Delta\lambda_{max}$) von zwischen 1 nm und 2 nm besitzt.

6. System nach einem der vorhergehenden Ansprüche, bei dem die Quelle (10) ein oberflächenemittierender Laser (VCSEL) oder eine Leuchtdiode (LED) ist.

7. System nach einem der vorhergehenden Ansprüche, bei dem die Länge der verwendeten Multimode-Faser multipliziert mit der Ethernet-Datenübertragungsrate des Systems mehr als 3000 Gb/s.m. beträgt.

8. System nach einem der vorhergehenden Ansprüche, bei dem die optische Vorrichtung mindestens ein Element aus einer Gruppe aufweist, die eine Phasenmaske, insbesondere eine durch diffraktive Optik hergestellte Phasenmaske, eine Mikrolinse, ein Bragg-Gitter, insbesondere ein Bragg-Gitter, das auf der Quelle oder der Faser aufgebracht ist, einen Modenmischer und einen Stecker vom Typ Schrägschliff-Stecker (APC-Stekker) umfasst.

**Revendications**

1. Système optique comprenant :

    - une source optique polychromatique (10) destinée à émettre un signal optique comprenant une pluralité de modes transverses à ordre de modes transverses unique ;
    - une liaison optique comprenant au moins une partie de fibre optique multimode (50) ;
    - un dispositif optique (20) positionné entre la source optique (10) et l'entrée de la fibre optique multimode (50),
    ledit dispositif optique étant adapté à modifier la répartition spatiale de ladite pluralité de modes transverses en fonction dudit ordre de modes transverses pour coupler l'énergie de chacun desdits modes transverses dans un mode de propagation approprié pour compenser au moins partiellement la dispersion modale de ladite liaison optique avec la dispersion chromatique, **caractérisé en ce que** ledit dispositif optique (20) est adapté à coupler l'énergie d'au moins un desdits modes transverses dans au moins un mode de propagation approprié de ladite liaison optique, dans lequel ledit ordre de modes transverses dudit au moins un mode transverse diffère dudit ordre dudit au moins un mode de propagation.

2. Système selon la revendication 1, dans lequel ledit ordre de modes transverses est inversé par ledit dispositif optique par rapport audit ordre de modes de propagation de ladite liaison optique.

3. Système selon l'une quelconque des revendications précédentes, dans lequel le dispositif optique (20) est adapté à coupler ledit signal optique pour distribuer l'énergie d'un mode transverse dans une pluralité de modes de propagation de la fibre.

4. Système selon l'une des revendications précédentes, dans lequel la fibre multimode est choisie pour avoir une bande passante effective modale (EMB$_c$) inférieure à 4700 MHz-km et le système présente une bande passante effective (EB) supérieure ou égale à 6000 MHz-km.

**5.** Système selon l'une des revendications précédentes, dans lequel la source (10) présente une largeur spectrale maximale ($\Delta\lambda_{max}$) comprise entre 1 nm et 2 nm.

**6.** Système selon l'une des revendications précédentes, dans lequel la source (10) est un laser à émission par la surface (VCSEL) ou une diode électroluminescente (LED).

**7.** Système selon l'une des revendications précédentes, dans lequel la longueur de la fibre multimode utilisée multipliée par le débit de données Ethernet du système est supérieure à 3000 Gb/s.m.

**8.** Système selon l'une des revendications précédentes, dans lequel ledit dispositif optique comprend au moins un élément d'un groupe comprenant un masque de phase, en particulier, un masque de phase produit par une optique diffractive, une micro-lentille, un réseau de Bragg, en particulier un réseau de Bragg gravé sur ladite source ou sur ladite fibre, un brasseur de modes et un connecteur du type connecteur poli à angle (APC).

Figure 1

**VCSEL Spectrum**

Figure 2

Figure 3

Figure 4

Figure 5

| Fibre 1 | Fibre 2 | Fibre 3 |

Figure 6

| Fibre 1 | Fibre 2 | Fibre 3 |

Figure 7

| | | |
|---|---|---|
| Fibre 1 | Fibre 2 | Fibre 3 |

Figure 8

| | | |
|---|---|---|
| Fibre 1 | Fibre 2 | Fibre 3 |

Figure 9

| | | |
|---|---|---|
| Fibre 1 | Fibre 2 | Fibre 3 |

Figure 10

| | | |
|---|---|---|
| Fibre 1 | Fibre 2 | Fibre 3 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6363195 B
- US 7139457 B
- US 20040184492 A
- US 20050078962 A
- GB 2399963 A
- WO 2005062505 A
- US 7194155 B

### Non-patent literature cited in the description

- **D.Gloge et al.** Multimode theory of graded-core fibres. *Bell System Technical Journal,* 1973, 1563-1578
- **Olshansky et al.** Pulse broadening in graded-index optical fibers. *Applied Optics,* February 1976, vol. 15 (2
- **A. Gholami et al.** Optimization of VCSEL Spatiotemporal Operation in MMF Links for 10-Gigabit Ethernet. *IEEE Journal of Selected Topics in Quantum Electronics,* July 2006, vol. 12 (4